# EUROPÄISCHE PATENTSCHRIFT

(11) **EP 1 492 689 B1**
(45) Veröffentlichungstag und Bekanntmachung des Hinweises auf die Patenterteilung: **13.07.2005**
(21) Anmeldenummer: 03745254.7
(22) Anmeldetag: 30.01.2003
(51) Int. Cl.: B60S 3/04, B60S 3/00

(54) **VORRICHTUNG ZUR DETEKTION DER POSITION EINES FAHRZEUGS BEI EINER FAHRZEUGBEHANDLUNGSANLAGE**
DEVICE FOR DETECTING THE POSITION OF A VEHICLE AT A VEHICLE TREATMENT INSTALLATION
DISPOSITIF DE DETECTION DE LA POSITION D'UN VEHICULE DANS UNE INSTALLATION DE TRAITEMENT DE VEHICULES

(30) Priorität: 30.03.2002 DE 10214424
(43) Veröffentlichungstag der Anmeldung: 05.01.2005
(73) Patentinhaber: WashTec Holding GmbH, 86153 Augsburg (DE)
(72) Erfinder: AUER, Robert, 86391 Stadtbergen (DE); WIMMER, Georg, 86444 Affing (DE)
(74) Vertreter: Rapp, Bertram, Dr.
(86) Internationale Anmeldenummer: PCT/EP2003/000918
(87) Internationale Veröffentlichungsnummer: WO 2003/082642

(56) Entgegenhaltungen:
- GB-A- 1 560 890
- US-A- 3 509 527
- US-A- 3 596 241
- US-A- 5 226 436

## Beschreibung

Die Erfindung betrifft eine Vorrichtung zur Detektion der Position eines Radfahrzeugs während der Einfahrt in eine Fahrzeugbehandlungsanlage nach dem Oberbegriff des Anspruchs 1. Eine solche Vorrichtung wird in der US,A,3 509 527 Offenbart.

Unter einer Fahrzeugbehandlungsanlage im Sinne der Beschreibung ist insbesondere eine Fahrzeugwaschanlage, z. B. in Form einer Portalwaschanlage oder einer Waschstraße, zu verstehen. Fahrzeugbehandlungsanlagen können jedoch beispielsweise auch Lackieranlagen sein.

Unter einem Radfahrzeug im Sinne dieser Beschreibung ist im wesentlichen ein Automobil mit vier Rädern zu verstehen, von denen jeweils zwei Räder hintereinander liegend in der gleichen Spur laufen. Radfahrzeuge können jedoch auch Anhänger oder Fahrzeuge mit vier Rädern in verschiedenen Spuren sein.

Bei der Positionierung von Fahrzeugen, insbesondere Autos, vor einer Fahrzeugwaschanlage stellt sich häufig das Problem, daß der Fahrer des zu waschenden Fahrzeugs dieses nicht genau vor die Einfahrtsspur der Waschanlage fährt Bei einer Waschstraße fluchten dann die Räder nicht mit der Führung und bei einer Portalwaschanlage steht das Fahrzeug zur Mittelachse seitlich versetzt. Dies führt entweder dazu, daß das Fahrzeug überhaupt nicht in die Waschanlage einfahren kann bzw. die Portalwaschanlage nicht funktioniert bzw. sie sich während des Betriebs abschaltet, falls das Fahrzeug zu weit seitlich von der Mitte versetzt positioniert ist. Zusätzlich kann das Fahrzeug nicht nur seitlich zur Mittelachse versetzt, sondern auch schräg vor der Autowaschstraße bzw. in der Portalwaschanlage stehen.

Um den Fahrer bei der Positionierung seines Fahrzeugs vor der Waschstraße bzw. in der Portalwaschanlage zu unterstützen, wurde daher neben den altbekannten Radführungsschieben und Radeinweisrohren eine Vielzahl von Positionier- bzw. Einfahrhilfen erdacht. Im einfachsten Falle werden hierzu einer oder mehrere im Sichtbereich des Fahrers und auf die Einfahrspur gerichtete Spiegel in der Fahrzeugbehandlungsanlage angeordnet, wie es im deutschen Gebrauchsmuster DE 299 12 916.0 beschrieben ist.

Ferner zeigt das deutsche Gebrauchsmuster 298 09 426 eine Einfahrhilfe mit einer Einrichtung zur Erzeugung von mindestens einer optisch sichtbaren Leitlinie, welche vorzugsweise in der Mittelachse der Fahrzeugbehandlungsanlage verläuft und an welcher sich der Fahrer orientieren kann.

Darüber hinaus sind auch dem Stand der Technik eine Reihe von Vomchtungen bekannt, welche entweder optisch oder auf Ultraschallbasis die Kontur eines Fahrzeugs abtasten, um die Waschelemente entsprechend dieser Kontur zu steuern. Beispiele hierfür sind die EP 0 283 446 A2, die JP 10230821, die JP 1001032 und die JP 08207713. Sofern bei diesen Vomchtungen die Kontur des Fahrzeuges optisch erfaßt wird, erfolgt dies vorzugsweise uber Lichtschranken oder über Kameraanordnungen mit angeschlossener Bildauswertung. Alle genannten Vorrichtungen dienen lediglich der Steuerung der Fahrzeugwaschanlage bzw. der Waschelemente bei eingefahrenem Fahrzeug, erleichtern es jedoch dem Fahrzeugführer nicht, sein Fahrzeug in der Waschanlage korrekt zu positionieren.

Die WO 00/50278 beschreibt ein Betriebsverfahren und eine Fahrzeugwaschanlage, welche ebenfalls über ein Kamerasystem verfügt, welches die Fahrzeugkontur optisch erfaßt und diese Daten in die Steuerung bzw. Regelung von Anlagenfunktionen benutzt werden. Darüber hinaus dienen bei dieser Druckschrift die optischen Daten jedoch zusätzlich zur Steuerung einer Einfahrhilfe. Das Kamerasystem wird insoweit also bereits aktiv bevor sich das Fahrzeug in seiner endgültigen Behandlungsposition befindet und dem Fahrer werden über eine optische Anzeige Richtungsinformationen bzw. Fahranweisungen gegeben.

Obwohl diese Kameranordnung gegenüber dem Stand der Technik beträchtliche Vorteile bietet, weist sie auch einige Nachteile auf. Insbesondere kann die Annäherung des Fahrzeugs an die Anlage mit optischen Mitteln nur unter Verwendung einer sehr aufwendigen und teuren Bildverarbeitung ausgewertet werden. Darüber hinaus kann zwar die Position der Fahrzeugfront relativ zuverlässig ermittelt werden, nicht aber eine eventuelle Schragstellung des Fahrzeugs vor der Behandlungsanlage, die aus unüberlegten oder falschen Lenkmanövem des Fahrzeugführers bei der Einfahrt resultieren kann. Eine derartige Schrägstellung kann mit allen bekannten optischen Sensoren, seien es Lichtschranken oder Kamersysteme, nur sehr unzuverlässig erfaßt werden.

Schließlich ist aus dem Stand der Technik eine sehr einfache elektrische Schaltvorrichtung zur Erfassung der Position eines einzigen Rades eines Fahrzeugs in einer Waschanlage bekannt, nämlich aus der JP 06321067. Diese zeigt eine vom rechten Vorderrad des zu waschenden Fahrzeugs zu überfahrende Drehplatte, an deren Achse ein elektrischer Schalter angeschlossen ist. Damit kann sichergestellt werden, daß sich das rechte Vorderrad wenigstens in einer halbwegs korrekten Waschposition befindet.

Auch bei dieser Druckschrift wird jedoch nicht das Problem einer eventuellen Schrägstellung gelöst. Darüber hinaus dient die Drehplatte nur der Erfassung der rechten Längsposition des Fahrzeugs und spricht auf einen seitlichen Versatz praktisch nicht an, da insbesondere Fahrzeuge mit breiten Reifen die Platte praktisch immer betätigen, wenn die Längsposition stimmt, das Fahrzeug also nicht zu weit vom und nicht zu weit hinten steht.

Ferner sind aus dem Stand der Technik elektrische Schaltkontaktmatten bekannt (vgl. z. B. DE 198 01 052 C2), die aus einem flächigen, flexiblen Grundmaterial und aus bandförmigen, über die Fläche des Grundmaterials verteilt verlaufenden, drucksensitiv schaltenden Schaltelementen bestehen. Diese Schaltkontaktmatten wurden bisher bei Sicherheitsleisten eingesetzt, um beispielsweise die Bewegung eines Tors zu stoppen, wenn sich ein Fahrzeug im Torbereich befindet. Eine Ortsbestimmung ist mit diesen bekannten Schaltkontaktmatten nicht möglich.

Es besteht daher die Aufgabe eine Vorrichtung zur Detektion der Position eines Radfahrzeugs während der Einfahrt in eine Fahrzeugbehandlungsanlage so weiterzubilden, daß auch ein seitlicher Versatz und eine Schrägstellung des Fahrzeugs zuverlässig erkannt werden können.

Gelöst wird diese Aufgabe mit den kennzeichnenden Merkmalen des Anspruchs 1. Vorteilhafte Ausgestaltungen sowie eine mit einer entsprechenden Vorrichtung ausgerüstete Fahrzeugbehandlungsanlage sind den Unteransprüchen entnehmbar.

Ein Ausführungsbeispiel der Erfindung wird nachfolgend unter Bezugnahme auf die begleitende Zeichnung näher beschrieben, welche eine schematische Draufsicht auf eine Detektionsvorrichtung vor einer Fahrzeugwaschanlage zeigt.

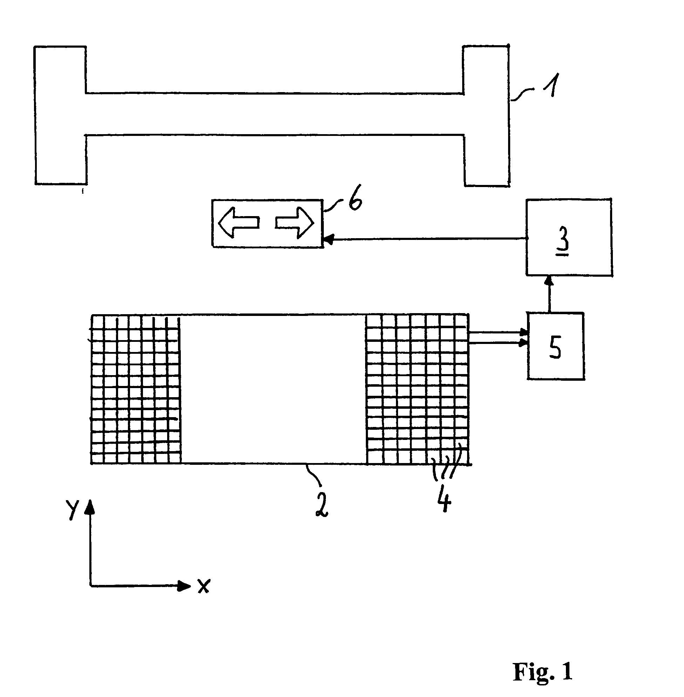

In der Figur ist mit der Bezugszahl 1 schematisch die Fahrzeugwaschanlage dargestellt. Hierbei kann es sich um einen in Längsnchtung des zu waschenden Fahrzeugs verfahrbares Portal handeln oder aber um das fixe Einfahrtsportal einer Waschstraße.

In Einfahrtsrichtung vor der Fahrzeugwaschanlage 1 befindet sich die Vorrichtung zur Detektion der Position des zu waschenden Radfahrzeugs, welche insbesondere eine Schalteinrichtung 2 aufweist. Diese Schalteinrichtung 2 ist ein Kontaktgitter, welches im dargestellten Ausführungsbeispiel zweiteilig ausgebildet ist, nämlich als linkes Kontaktgitter und als rechtes Kontaktgitter. Das linke Kontaktgitter dient der Aufnahme des linken vorderen Rades des zu waschenden Fahrzeugs wahrend das rechte Kontaktgitter der Aufnahme des rechten vorderen Rades dient. Zwischen den beiden Kontaktgittern befindet sich keine aktive Zone.

Beide Kontaktgitter 2 bestehen aus einer Vielzahl elektrischer Schalter 4, welche in der Zeichnung nur schematisch dargestellt sind. Jeder Punkt der dargestellten Matrix soll einen elektrischen Schalter beinhalten. Die elektrischen Schalter in den Kontaktgittern 2 sind beispielsweise pneumatisch oder mechanisch betätigte Schalter.

Die Betätigung jedes einzelnen Schalters 4 in jedem Kontaktgitter 2 ist einzeln erfassbar, und zwar entweder durch eine völlig einzelne Ansteuerung des Schalters mit Signaldrähten oder durch eine an sich bekannte Matrizenauswertung, wobei jede Zeile und jede Spalte jedes Kontaktgitters elektrisch beschaltet sind. Einzelheiten zu derartigen elektrischen Schaltkontaktmatten die an sich bekannt sind, sind beispielsweise in der DE 198 01 052 C2 beschrieben, deren Offenbarungsgehalt hier ausdrücklich in Bezug genommen wird.

Von den Kontaktgittern 2 der Schalteinrichtung führen elektrische Leitungen zu einer Mittelungseinrichtung 5, welche bei Betätigung mehrerer Schalter 4 eines Kontaktgitters 2 durch dasselbe Rad des zu waschenden Fahrzeugs den Positionsmittelwert errechnet, und zwar sowohl in X- als auch in Y-Richtung, wobei mit der Y-Richtung die Einfahrtsrichtung des Fahrzeugs in die Waschanlage 1 und mit der X-Richtung die Richtung quer hierzu bezeichnet wird. Auf diese Weise kann der Mittelpunkt der Aufliegefläche jedes Reifens des Radfahrzeugs auf dem jeweiligen Kontaktgitter bestimmt werden und somit die absolute Position des Fahrzeugs vor der Fahrzeugwaschanlage 1.

Von der Mittelungseinrichtung 5 wird das Signal über die Position der beiden Vorderräder des zu waschenden Fahrzeugs an eine Auswerteeinheit 3 weitergegeben, welche wiederum eine uber dem Portal der Fahrzeugwaschanlage 1 angeordnete Anzeigeeinheit 6 ansteuert. Diese Anzeigeeinheit 6 weist im dargestellten Ausführungsbeispiel 2 nach Art einer ampelbeleuchtbare Pfeile auf, wobei ein Pfeil nach links und ein Pfeil nach rechts weist. Die Anzeigeeinheit 6 befindet sich im Blickfeld des Fahrers des zu waschenden Fahrzeugs.

### Die beschriebene Vorrichtung funktioniert wie folgt:

Sobald sich ein zu waschendes Fahrzeug der Waschanlage 1 nähert, gelangen dessen Vorderräder auf die Kontaktgitter 2, wobei das linke Vorderrad eine Vielzahl einzelner elektrischer Schalter 4 im linken Bereich des Kontaktgitters 2 und das rechte Vorderrad eine Vielzahl elektrischer Schalter 4 im rechten Bereich des Kontaktgitters 2 betätigt. Die Mittelungseinrichtung erhält daraufhin die Information über die im jeweiligen Kontaktgitter betätigten Schalter 4 und errechnet daraus den Mittelwert des linken Rades und des rechten Rades, jeweils getrennt in X- und Y-Richtung. Bevorzugt liegen die Kontaktgitter 2 symmetrisch vor der Einfahrt der Fahrzeugwaschanlage 1. Stimmen dabei die Y-Werte des linken und rechten Rades uberein und die X-Werte liegen aus der Mitte nach links oder rechts versetzt, bedeutet dies, dass das Fahrzeug zu weit links oder zu weit rechts steht. Die Auswerteeinheit 3 aktiviert daraufhin die Anzeigeeinrichtung 6, bei welcher entweder der linke Pfeil (falls das Fahrzeug zu weit rechts steht) bzw. der rechte Pfeil (falls das Fahrzeug zu weit links steht) leuchtet. Der Fahrer kann dann sein Fahrzeug zurücksetzen und in der korrekten Position noch einmal nach vom fahren oder einfach weiterfahren und durch eine Lenkbewegung den Versatz korrigieren bis kein Pfeil mehr aufleuchtet.

Falls die Y-Werte des linken und rechten Rades nicht übereinstimmen bedeutet dies, dass das Fahrzeug schräg zur Fahrzeugwaschanlage steht und eine Einfahrt mit einem Beschädigungsrisiko verbunden wäre. In diesem Fall leuchtet eine (nicht dargestellte) Warnlampe auf, welche den Fahrer auf die Schrägstellung hinweist und ihn veranlasst zurückzusetzen und noch einmal gerade auf die Fahrzeugwaschanlage 1 zuzufahren.

Zusätzlich zu den optischen Anzeigemitteln (Pfeile und Warneinrichtung) können akustische Anzeigeeinnchtungen vorhanden sein.

In einer alternativen Ausführungsform wird anstelle von zwei separaten Kontaktgittern 2 noch ein sehr breites Kontaktgitter 2 verwendet, welches mindestens der maximalen Spurbreite der zu waschenden Fahrzeuge entspricht, wodurch mindestens zwei, in verschiedenen Spuren liegende Räder des Fahrzeugs die Kontaktgitter 2 betätigen können. Ferner ist es möglich, das die Länge des oder jedem Kontaktgitters mindestens den maximalen Radstand der zu behandelnden Fahrzeuge entspricht, wobei sowohl die Vorder- als auch die Hinterräder dann das Kontaktgitter gleichzeitig betätigen können. Hierdurch ergeben sich noch bessere Auswertemöglichkeiten insbesondere hinsichtlich einer Schrägstellung des Fahrzeugs und dessen Einfahrtsgeschwindigkeit. Die Vorrichtung wird jedoch durch die höhere Anzahl der benötigten Kontaktgitter 2 und Schalter 4 teurer. Wird dies in Kauf genommen, kann über das Kontaktgitter aber auch die Annäherung des Fahrzeugs an die Waschanlage und somit die Längspositionierung des Fahrzeugs vor der Anlage realisiert werden. Durch die Auswertung der Fahrzeuggeschwindigkeit lässt sich auch eine Anzeigetafel mit Wamhinweisen steuern, welche dem Fahrer zum Beispiel den Hinweis auf "langsam vorfahren" geben kann.

Bei einer weiteren alternativen Ausführungsform ist das Kontaktgitter in Gestalt mehrerer, einzelner Kontaktstreifen ausgebildet, welche in Einfahrtsnchtung angeordnet und für beide Fahrspuren (linkes und rechtes Rad) getrennt auswertbar sind. Diese Vorrichtung führt zu einer besseren Aussage über die Mittelposition des Fahrzeugs relativ zur Anlage und damit über eine eventuelle Schrägstellung des Fahrzeugs, insbesondere, wenn diese Kontaktstreifen in vier Felder aufgeteilt werden, die von ihrer Größe so bemessen sind, dass jeweils ein Rad des Fahrzeugs auf einem derartigen Feld zu stehen kommt.

Die erfindungsgemäße Vorrichtung eignet sich nicht nur für eine Fahrzeugwaschanlage, sondern auch für jede andere Fahrzeugbehandlungsanlage, beispielsweise ein Polier-, Trocknungs- oder Reinigungsanlage. Sie kann vor einer Waschstraße bzw. vor einer Portalwaschanlage mit verfahrbarem Portal eingesetzt werden. Zur Erfindung gehört auch eine Fahrzeugbehandlungsanlage, beispielsweise eine Portalwaschanlage oder eine Waschstraße, welche mit einer erfindungsgemäßen Detektionsvorrichtung ausgerüstet ist.

## Patentansprüche

1. Vorrichtung zur Detektion der Position eines Radfahrzeugs während der Einfahrt in eine Fahrzeugbehandlungsanlage (1), wobei in Bodennähe mindestens eine elektrische Schalteinrichtung angeordnet ist, die beim Überfahren durch mindestens ein Rad des Fahrzeugs betätigt wird, mit einer Auswerteeinheit (3), welche aus der Betätigung der Schalteinrichtung (2) die momentane Position des Rades und damit des Fahrzeuges ermittelt, **dadurch gekennzeichnet, dass** die Schalteinrichtung als Kontaktgitter (2) in Gestalt einer zweidimensionalen Matrix, insbesondere einer Kontaktmatte, mit einer Vielzahl elektrischer Schalter (4) ausgebildet ist, wobei jedem Punkt der Matrix ein elektrischer Schalter (4) zugeordnet ist, und die Betätigung der Schalter (4) durch die Auswerteeinheit (3) einzeln erfassbar ist.

2. Vorrichtung nach Anspruch 1, **dadurch gekennzeichnet, dass** die Breite der Kontaktgitter (2) mindestens der maximalen Spurbreite der zu behandelnden Fahrzeuge entspricht, wodurch mindestens zwei, in verschiedenen Spuren liegende Räder des Fahrzeugs die Kontaktgitter (2) betätigen können.

3. Vorrichtung nach Anspruch 1, **dadurch gekennzeichnet, dass** mindestens zwei nebeneinander etwa im Abstand der mittleren Spurbreite der zu behandelnden Fahrzeuge angeordnete Kontaktgitter (2) vorgesehen sind, wodurch mindestens zwei, in verschiedenen Spuren liegende Räder des Fahrzeugs das entsprechende Kontaktgitter betätigen können.

4. Vorrichtung nach einem der Ansprüche 2 oder 3, **dadurch gekennzeichnet, dass** die Länge des oder jeden Kontaktgitters mindestens dem maximalen Radstand der zu behandelnden Fahrzeuge entspricht, wodurch sowohl die Vorder- als auch die Hinterräder das Kontaktgitter gleichzeitig betätigen können.

5. Vorrichtung nach einem der Ansprüche 2 oder 3, **dadurch gekennzeichnet, dass** hinter dem oder jedem Kontaktgitter (2) etwa im Abstand des maximalen Radstandes der zu behandelnden Fahrzeuge ein weiteres Kontaktgitter angeordnet ist, wodurch sowohl die Vorder- als auch die Hinterräder gleichzeitig ein Kontaktgitter betätigen können.

6. Vorrichtung nach einem der voranstehenden Ansprüche, **dadurch gekennzeichnet, dass** jedem Kontaktgitter eine Mittelungseinrichtung (5) zugeordnet ist, welche bei Betätigung mehrerer Schalter eines Kontaktgitters durch das selbe Rad den Positionsmittelwert errechnet und an die Auswerteeinrichtung liefert.

7. Vorrichtung nach einem der voranstehenden Ansprüche, **dadurch gekennzeichnet, dass** das Kontaktgitter (2) eine Pneumatikmatte ist und die elektrischen Schalter mittelbar durch Druckerhöhung in den einzelnen Pneumatikelementen der Pneumatikmatte betätigt werden.

8. Vorrichtung nach einem der voranstehenden Ansprüche, **dadurch gekennzeichnet, dass** die Auswerteeinheit (3) die Längsposition und/oder die Querposition und/oder die Schrägstellung des zu behandelnden Fahrzeugs ermittelt.

9. Vorrichtung nach einem der voranstehenden Ansprüche, **dadurch gekennzeichnet, dass** sie eine für den Fahrer sichtbare Anzeigeeinheit (6) zur Anzeige der von der Auswerteeinheit (3) ermittelten Position des Fahrzeugs aufweist.

10. Fahrzeugbehandlungsanlage, **gekennzeichnet durch** eine Vorrichtung nach einem der voranstehenden Ansprüche in ihrem Einfahrtsbereich.

11. Fahrzeugbehandlungsanlage nach Anspruch 10, **dadurch gekennzeichnet, dass** es sich um eine Fahrzeugwaschanlage, insbesondere eine Portalwaschanlage oder eine Waschstrasse handelt.

## Claims

1. Device for detecting the position of a wheeled vehicle while entering a vehicle treatment installation (1), wherein at least one electrical switching device is arranged in the vicinity of the ground and is actuated when run over by at least one wheel of the vehicle, with an evaluating unit (3) which determines the instantaneous position of the wheel and hence of the vehicle from the actuation of the switching device (2), **characterised in that** the switching device is embodied as a contact grid (2) in the form of a two-dimensional matrix, in particular a contact mat, with a plurality of electrical switches (4), wherein each point of the matrix has associated therewith an electrical switch (4) and the actuation of the switches (4) can be detected individually by the evaluating unit (3).

2. Device according to claim 1, **characterised in that** the breadth of the contact grids (2) corresponds at least to the maximum track width of the vehicles to be treated, through which at least two wheels of the vehicle lying in different tracks can actuate the contact grids (2).

3. Device according to claim 1, **characterised in that** at least two contact grids (2) are provided arranged next to one another roughly separated by the mean track width of the vehicles to be treated, through which at least two wheels of the vehicle lying in different tracks can actuate the corresponding contact grid.

4. Device according to one of claims 2 or 3, **characterised in that** the length of the or each contact grid corresponds at least to the maximum wheelbase of the vehicles to be treated, through which both the front and the rear wheels can actuate the contact grid at the same time.

5. Device according to one of claims 2 or 3, **characterised in that** a further contact grid is arranged behind the or each contact grid (2) roughly separated by the maximum wheelbase of the vehicles to be treated, through which both the front and the rear wheels can actuate a contact grid at the same time.

6. Device according to one of the preceding claims, **characterised in that** each contact grid has associated therewith an averaging device (5) which calculates the average position value when a plurality of switches of a contact grid are actuated by the same wheel, and supplies it to the evaluating device.

7. Device according to one of the preceding claims, **characterised in that** the contact grid (2) is a pneumatic mat and the electrical switches can be actuated indirectly by an increase in the pressure in the individual pneumatic elements of the pneumatic mat.

8. Device according to one of the preceding claims, **characterised in that** the evaluating unit (3) determines the longitudinal position and/or the transverse position and/or the angular position of the vehicle to be treated.

9. Device according to one of the preceding claims, **characterised in that** it exhibits an indicating device (6) which is visible to the driver to indicate the position of the vehicle determined by the evaluating unit (3).

10. Vehicle treatment installation, **characterised by** a device according to one of the preceding claims in its entrance area.

11. Vehicle treatment installation according to claim 10, **characterised in that** it is a vehicle washing installation, in particular a portal washing installation or a washing line.

## Revendications

1. Dispositif de détection de la position d'un véhicule pendant l'entrée dans une installation de traitement de véhicules (1), sachant qu'est disposé prés du sol au moins un dispositif de commutation électrique, qui est actionné lorsqu'il est franchi par au moins une roue du véhicule, avec une unité d'évaluation (3), laquelle détermine à partir de l'actionnement du dispositif de commutation (2) la position momentanée de la roue et ainsi du véhicule, **caractérisé en ce que** le dispositif de commutation est conçu comme grille de contact (2) sous forme d'une matrice bidimensionnelle, en particulier un paillasson à contact, avec une pluralité de commutateurs électriques (4), sachant qu'un commutateur électrique (4) est affecté à chaque point de la matrice et que l'actionnement des commutateurs (4) peut être effectué de manière individuelle par l'unité d'évaluation (3).

2. Dispositif selon la revendication 1, **caractérisé en ce que** la largeur des grilles de contact (2) correspond au moins à la largeur de voie maximale des véhicules à traiter, permettant à au moins deux roues du véhicule se trouvant sur des voies différentes de pouvoir actionner les grilles de contact (2).

3. Dispositif selon la revendication 1, **caractérisé en ce que** sont prévues au moins deux grilles de contact (2) disposées l'une à côté de l'autre à peu près à distance de la largeur de voie centrale des véhicules à traiter, permettant à au moins deux roues du véhicule se trouvant sur des voies différentes de pouvoir actionner la grille de contact correspondante.

4. Dispositif selon l'une quelconque des revendications 2 ou 3, **caractérisé en ce que** la longueur de la grille de contact ou de chaque grille de contact correspond au moins à l'empattement maximal des véhicules à traiter, permettant aussi bien aux roues avant qu'aux roues arrière de pouvoir actionner en même temps la grille de contact.

5. Dispositif selon l'une quelconque des revendications 2 ou 3, **caractérisé en ce que** derrière la grille de contact ou chaque grille de contact (2) est disposée à peu près à distance de l'empattement maximal des véhicules à traiter une autre grille de contact, permettant aussi bien aux roues avant qu'aux roues arrière de pouvoir actionner en même temps une grille de contact.

6. Dispositif selon l'une quelconque des revendications précédentes, **caractérisé en ce qu'**est disposé pour chaque grille de contact un dispositif établissant une moyenne (5), lequel calcule lors de l'actionnement de plusieurs commutateurs d'une grille de contact par la même roue la valeur moyenne de la position et la transmet au dispositif d'évaluation.

7. Dispositif selon l'une quelconque des revendications précédentes, **caractérisé en ce que** la grille de contact (2) est un paillasson pneumatique et que les commutateurs électriques sont actionnés indirectement par augmentation de la pression dans les différents éléments pneumatiques du paillasson pneumatique.

8. Dispositif selon l'une quelconque des revendications précédentes, **caractérisé en ce que** l'unité d'évaluation (3) détermine la position longitudinale et/ou la position transversale et/ou l'inclinaison du véhicule à traiter.

9. Dispositif selon l'une quelconque des revendications précédentes, **caractérisé en ce qu'**il comprend une unité d'affichage (6) visible pour le conducteur afin d'afficher la position du véhicule déterminée par l'unité d'évaluation (3).

10. Installation de traitement de véhicules, **caractérisée par** un dispositif selon l'une quelconque des revendications précédentes dans sa zone d'entrée.

11. Installation de traitement de véhicules selon la revendication 10, **caractérisée en ce qu'**il s'agit d'une installation de lavage de véhicules, en particulier d'une installation de lavage à portique ou à rail.
